# EUROPÄISCHE PATENTANMELDUNG

(11) **EP 1 284 364 A2**
(43) Veröffentlichungstag der Anmeldung: **19.02.2003**
(21) Anmeldenummer: 02013364.1
(22) Anmeldetag: 19.06.2002
(51) Int. Cl.: F03B 17/06, F03B 7/00

(54) **Wasserkraftwerk**

(30) Priorität: 27.06.2001 DE 10131074
(71) Anmelder: Gugg, Anton, 5310 Mondsee (AT)
(72) Erfinder: Gugg, Anton, 5310 Mondsee (AT)
(74) Vertreter: Neubauer, Hans-Jürgen, Dipl.-Phys.

(57) **Zusammenfassung**

Die Erfindung betrifft ein mit Wasserkraft betreibbares Kleinkraftwerk, insbesondere zur Erzeugung von Elektroenergie, mit einem Rotorgehäuse (2) und einem Rotor (11). Erfindungsgemäß ist das Rotorgehäuse (2) in eine Durchströmkammer (8) und eine Rückdrehkammer (9) durch eine Trennwand (6) mit Durchtrittspalt (18) geteilt. Die Rotorflügel (10a, 10b, 10c, 10d) sind zwangsgesteuert schwenkbar ausgeführt, dergestalt, dass sie in der Durchströmkammer (8) rotorachsparallel und in der Rückdrehkammer (9) in eine Radialebene gestellt sind, wobei sie aus dieser Stellung durch den Durchtrittspalt (18) in die Durchströmkammer (8) eindrehbar sind.

## Beschreibung

Die Vorräte fossiler Brennstoffe zur Energieerzeugung sind begrenzt. Die Verbrennung zur Energieerzeugung führt zu Schadstoffbelastungen der Umwelt und trägt insbesondere langfristig zu einer ungünstigen globalen Erwärmung bei, die wiederum zu schwerwiegenden Klimaveränderungen führt. Die Atomenergie birgt die bekannten Gefahren, so dass bereits von mehreren Staaten der Ausstieg aus der Atomenergieerzeugung beschlossen worden ist.

Vor diesem Hintergrund ist es eine ständige Herausforderung und Aufgabe nach alternativen und regenerativen Energieformen zu erschließen und insbesondere bekannte Energieformen besser auszunützen. Insbesondere ist die Wasserkraft von fließendem Wasser in Bächen und Flüssen für die Energieerzeugung noch nicht ausreichend ausgenützt, so dass hier immense Energiereserven nahezu kostenlos und umweltfreundlich zur Verfügung stehen.

Die bisherige Energieerzeugung von Elektroenergie mittels Wasserkraft geschieht im wesentlichen in Großanlagen. Dazu ist es bekannt, Wasser in Stauseen aufzustauen und unter Ausnützung einer Höhendifferenz des Wasserspiegels im Stausee und des nachfolgenden Auslaufs Wasser mit hoher Strömungsgeschwindigkeit auf Turbinen zu lenken, die mit Elektrogeneratoren verbunden sind. Solche Großanlagen eignen sich ersichtlich nicht für einen dezentralen Einsatz bei Kleinbetrieben beispielsweise im handwerklichen oder landwirtschaftlichen Bereich. Zudem sind hohe Strömungsgeschwindigkeiten für einen effektiven Betrieb der Turbinen erforderlich, die meist durch die normale Fließgeschwindigkeit in Bächen und Flüssen nicht aufgebracht werden.

Als Kleinanlagen für die Erzeugung einer Drehbewegung durch Wasserkraft, beispielsweise für Mühlen sind Wasserräder in zwei grundsätzlich unterschiedlichen Ausführungen bekannt. Bei der einen Ausführungsform wird Wasser von oben und bei der anderen Ausführungsform von unten auf Schaufeln und/oder Wasserbehälter der Wasserräder gelenkt. Die Funktion solcher Wasserräder erfordert einen Rückdrehbereich, der aus dem Wasser herausragt. Damit sind auch solche Wasserräder relativ große und aufwendige Vorrichtungen, die umfangreiche Maßnahmen zur Anpassung an den jeweiligen aktuellen Wasserstand erfordern.

Aufgabe der Erfindung ist es, demgegenüber ein mit Wasserkraft betreibbares Kleinkraftwerk insbesondere zur Erzeugung von Elektroenergie zu schaffen, welches bei guter Funktion und Effizienz einfach herstellbar und auch bei relativ geringen Wasserströmgeschwindigkeiten einsetzbar ist.

Diese Aufgabe wird mit den Merkmalen des Anspruchs 1 gelöst.

Gemäß Anspruch 1 weist bei einem gattungsgemäßen Gegenstand das Zylindergehäuse ausgehend von der Zylindermantelwand wenigstens bis zur Zylinderachse eine achsparallele Trennwand auf, welche das Zylindergehäuse in einen Durchströmkammerbereich und einen Rückdrehkammerbereich teilt, wobei der Durchströmkammerbereich in der Zylindermantelwand angrenzend an den Trennwandbereich eine Einströmöffnung und eine dazu gegenüberliegende Ausströmöffnung aufweist. Das Zylindergehäuse ist in der Funktionsposition des Kleinkraftwerks insgesamt in die Wasserströmung eintauchbar und verankerbar.

An der Rotorwelle sind gegeneinander in Umfangrichtung versetzt wenigstens zwei radial abstehende Rotorflügel jeweils um eine Radialachse zwangsgeführt schwenkbar gelagert, dergestalt dass sie mit den Rotorflügelflächen beim Durchgang durch die Durchströmkammer zumindest in einem Teilbereich davon etwa zylinderachsparallel und beim Durchgang durch die Rückdrehkammer zumindest in einem Teilbereich davon etwa in eine Radialebene schwenkbar sind. Dazu weist die Trennwand im Bereich der jeweils zugeordneten Radialachsen einen Durchtrittspalt für ein Eindrehen der in eine Radialebene geschwenkten Rotorflügel vom Rückdrehkammerbereich in den Durchströmkammerbereich auf.

Ein Kleinkraftwerk mit einem so ausgebildeten Drehbewegungsgenerator kann mit geringen Herstellkosten in großen Stückzahlen gefertigt werden. Kosten für Stauseen oder Regulierungsmaßnahmen für eine Wasserstandsanpassung können entfallen, da der Drehbewegungsgenerator des Kleinkraftwerks einfach im strömenden Wasser versenkt und verankert wird. Auch bei geringem Gefälle wie beispielsweise in kleinen Flußläufen sind erfindungsgemäße Kleinkraftwerke effektiv einsetzbar. Vorteilhaft können auch mehrere solcher Aggregate zur Steigerung der Effektivität parallel oder hintereinander in einem Wasserlauf angeordnet werden.

Vorzugsweise wird die mittels Wasserkraft erzeugte Drehbewegung zum Betrieb eines angeschlossenen Elektrogenerators verwendet. Dafür verwendbare Elektrogeneratoren sind in unterschiedlichen Ausführungen bekannt. Grundsätzlich kann die erzeugte Drehbewegung aber auch für andere Zwecke unmittelbar oder mittelbar genutzt werden.

Insgesamt ergibt sich bei einem dezentralen Einsatz vieler erfindungsgemäßer Kleinkraftwerke eine umweltfreundliche Erschließung immenser und bisher brach liegender Energieresourcen der Wasserkraft in Flüssen und Bächen. Wegen des versenkten Einbaus wird der natürlich Eindruck der Flusslandschaften nicht gestört. Zudem wird insbesondere bei regulierten Flussläufen mit ungünstig hohen Fließgeschwindigkeiten und dem unerwünschten Effekt einer Flussbetteintiefung die Fließgeschwindigkeit beim Einbau der Aggregate im Flusslauf vorteilhaft verringert. Sonst erforderliche Verbauungen im Flusslauf, die den ausschließlichen Zweck der Fließgeschwindigkeitsverringerung haben, wie beispielsweise aufwendige Bunenverbauungen können entfallen.

Die Verbrennung fossiler Brennstoffe wie Kohle, Erdöl und Erdgas und damit die Freisetzung von Kohlendioxyd kann insgesamt reduziert werden, wodurch die Umweltbelastung und die Gefahr von ungünstigen Klimawechseln durch einen Treibhauseffekt reduziert werden. Zudem liegt ein erhebliches wirtschaftliches Potential in einem umfangreichen Einsatz der Erfindung.

Eine bevorzugte Anordnung in der Wasserströmung gemäß Anspruch 2 besteht darin, dass die Rotorwelle in der Funktionsstellung des Drehbewegungsgenerators etwa vertikal ausgerichtet ist. Wegen der kompletten Absenkung im Wasserlauf ist grundsätzlich auch eine andere Wellenlage möglich. Ein angeschlossener Elektrogenerator wird vorzugsweise als wasserdichte Einheit unmittelbar an der Rotorwelle angeschlossen und mit in den Wasserlauf versenkt, so dass lediglich Elektrokabel aus dem Wasserlauf heraus an Land geführt sind.

Nach Anspruch 3 sollen die Einströmöffnung und die Ausströmöffnung möglichst groß sein und sich dazu jeweils zwischen der Bodenwand und der Deckenwand erstrecken.

Für eine Verankerung in einem Wasserlauf oder am Ufer ist es zweckmäßig nach Anspruch 4 am Rotorgehäuse Halteelemente, beispielsweise Halteaugen für einen Anschluß von Verankerungseinrichtungen wie beispielsweise von Stahlseilen anzubringen.

Die Trennwand ist für eine gute Funktion in jedem Fall im Bereich der Einströmöffnung von der Zylindermantelwand bis zur Zylinderachse anzubringen. Nach Anspruch 5 kann es je nach den Gegebenheiten auch zweckmäßig sein, die Trennwand quer durch das gesamte Zylindergehäuse anzuordnen, so dass eine stärkere Strömungsabtrennung zwischen der Durchströmkammer und der Rückdrehkammer erfolgt. Dabei ist ein weiterer Durchtrittspalt für ein Ausdrehen der von einer achsparallelen Stellung in eine Radialebene schwenkenden Rotorflügel von der Durchströmkammer in die Rückströmkammer vorzusehen.

Für einen guten Wirkungsgrad und eine einfache Herstellmöglichkeit ist es nach Anspruch 6 ausreichend, die Rotorflügel plattenförmig und eben auszubilden. Eine aufwendige und teure gebogene Flügelform wie bei Turbinen ist nicht erforderlich.

Die Radialachsen an den Rotorflügeln können in ihren Flächenmitten angeordnet sein, so dass auf den dadurch jeweils bestimmten oberen und unteren Flächenbereich im wesentlichen der gleiche Wasserdruck wirkt. Gegebenenfalls kann es zweckmäßiger sein, nach Anspruch 7 die Radialachsen außermittig, in einer besonders bevorzugten Ausführungsform im Bereich des oberen Randes der Rotorflügel anzuordnen. Dadurch sind die betriebsmäßigen zwangsgeführten Schwenkbewegungen während eines Arbeitszyklus nur durch den Wasserdruck auf die Rotorflügel in Verbindung mit einem Getriebe und/oder nur mit Anschlägen einfach und selbsttätig steuerbar.

Ein guter Wirkungsgrad ist mit vier oder mehreren gleichbeabstandeten Rotorflügeln gemäß Anspruch 8 erzielbar.

Um ein Überströmen von Wasser aus der Durchströmkammer in die Rückführkammer weitgehend zu verhindern, kann nach Anspruch 9 an den Durchtrittspalten eine von den Rotorflügeln aufdrückbare Dichtlippe aus Elastomermaterial vorgesehen sein.

Der Strömungsverlauf zur Einströmöffnung kann nach Anspruch 10 mittels davor angebrachter Strömungsleitwände und/oder Einströmtrichter günstig beeinflußt werden. Zudem kann als Rotorschutz ein Schutzgitter angebracht werden. Ein solches Schutzgitter kann relativ großmaschig sein, da im Wasser mitgeführte Gegenstände relativ ungehindert durch das Rotorgehäuse bewegbar sind und dadurch der Rotor für Beschädigungen unkritisch ist.

Nach Anspruch 11 kann die Kraft für die zwangsgesteuerte Verschwenkung der Rotorflügel unmittelbar oder mittelbar von der durch das Rotorgehäuse geführten Wasserströmung abgeleitet werden. Zusätzliche Antriebe für die Schwenkbewegung sind somit nicht erforderlich.

Nach Anspruch 12 wird zweckmäßig als Zwangssteuervorrichtung für die Verschwenkung der Rotorflügel ein Getriebe verwendet, mit wenigstens einem rotorgehäusefesten, ortsfesten Getriebeteil und wenigstens einem zugeordneten rotorwellenfesten, mitdrehenden und durch einen Eingriff am ortsfesten Getriebeteil schwenkveränderbaren Getriebeteil, welches wiederum eine Verbindung zum Rotorflügel für dessen Schwenkverstellung hat. Ein solches Getriebe kann beispielsweise aus einem ortsfesten Zahnkranz und einem jeweils mit einer Schwenkwelle verbundenen daran abrollenden Zahnrad bestehen. Die Schwenkverstellung erfolgt dabei selbsttätig über eine Drehbewegung der Rotorflügel. Auch ein Hin- und Herschwenken der Rotorflügel durch eine Kombination von Anschlägen und/oder Kulissenführungen ist denkbar. Ebenso sind Anordnungen über eine feste Drehachse und eine darübergesteckte hohle Rotorwelle möglich, wobei Kulissenführungen zwischen Achse und Hohlwelle ausführbar sind.

Anhand einer Zeichnung wird ein mögliches Ausführungsbeispiel der Erfindung näher erläutert.

Es zeigen:
- Fig. 1: eine Draufsicht auf einen Schnitt eines Drehbewegungsgenerators entlang der Linie A-A aus Fig. 2
- Fig. 2: eine Seitenansicht des Drehbewegungsgenerators nach Fig. 1 in Richtung einer Einströmöffnung.

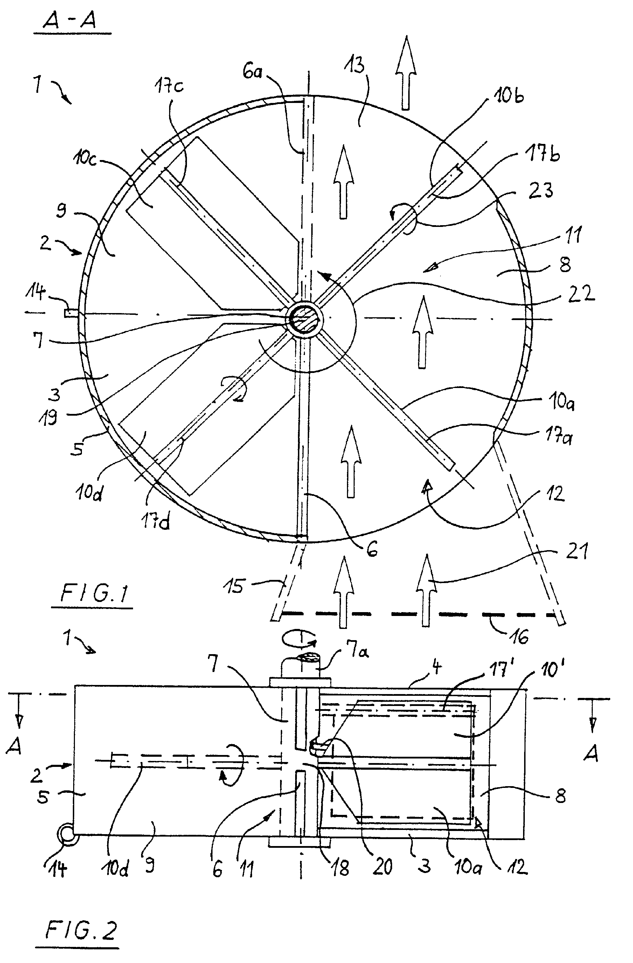

In Fig. 1 ist ein Drehbewegungsgenerator 1 dargestellt mit einem zylindrischen Rotorgehäuse 2 mit einer Bodenwand 3, einer Deckelwand 4 und einer Zylindermantelwand 5.

Im Rotorgehäuse 2 ist eine querverlaufende Trennwand 6 angeordnet, welche sich ausgehend von der Zylindermantelwand 5 bis zu einer zentralen Rotorwelle 7 erstreckt. In einer alternativen Ausführungsform kann sich die Trennwand 6 auch mit einem weiteren Abschnitt 6a (strichliert eingezeichnet) quer durch das gesamte Rotorgehäuse 2 erstrecken. Damit wird das Rotorgehäuse in eine Durchströmkammer 8 und eine Rückdrehkammer 9 für vier Rotorflügel 10a, 10b, 10c, 10d, eines Rotors 11 geteilt.

Angrenzend an die Trennwand 6 ist in der Zylindermantelwand 5 zwischen Bodenwand 3 und Deckelwand 4 eine Einströmöffnung 12 und dazu gegenüberliegend eine Ausströmöffnung 13 angeordnet. Am Rotorgehäuse 2 sind zudem Halteelemente für eine Verankerung unter der Oberfläche eines Wasserlaufs angebracht, von denen schematisch und beispielsweise lediglich ein Halteauge 14 zum Anschluß eines Stahlseils dargestellt ist.

Strichliert eingezeichnet ist zudem die mögliche Anordnung von Strömungsleitwänden und eines Einströmtrichters 15 sowie eines Schutzgitters 16 vor der Einströmöffnung 12.

Die ebenen und plattenförmigen Rotorflügel 10a, 10b, 10c, 10d sind jeweils über Radialachsen 17a, 17b, 17c, 17d schwenkbar gelagert und von einer radialebenen Stellung in der Rückdrehkammer 9 in eine zylinderachsparallele Stellung in der Durchströmkammer 8 schwenkbar, wie dies zeichnerisch dargestellt ist. Für einen Durchtritt der Rotorflügel 10a, 10b, 10c, 10d von der Rückdrehkammer 9 in die Durchströmkammer 8 ist in der Trennwand 6 ein Durchtrittspalt 18 angeordnet, durch den ein Durchtritt in der Radialebene möglich ist. Anschließend wird dann eine Drehung in die zylinderachsparallele Stellung zwangsgesteuert bewirkt.

Die Rotorwelle 7 ist hier schematisch und beispielsweise als Hohlwelle dargestellt, die auf einer feststehenden Zentralachse 19 läuft. Schematisch ist mit dem Bezugszeichen 20 eine Kulissensteuerung für die Schwenkverstellung des Rotorflügels 10a eingezeichnet, wobei einem Fachmann hierzu Getriebeanordnungen für die angegebene Schwenkverstellung unter Ausnützung der Rotordrehbewegung in unterschiedlichen Ausführungsformen bekannt sind, so dass auf eine konkrete Getriebeanordnung hier nicht weiter eingegangen wird.

Die Rotorachse 7 ragt mit einem Abtriebswellenteil 7a aus dem Rotorgehäuse 2 heraus, wo ein (nicht dargestellter, an sich bekannter) Elektrogenerator anzuschließen ist.

Der Drehbewegungsgenerator 1 hat folgende Funktion:
In der Funktionsstellung ist der Drehbewegungsgenerator 1 insgesamt in einem Wasserlauf versenkt und verankert, wobei die Rotorwelle vorzugsweise vertikal steht. Dabei strömt Wasser in die Einströmöffnung 12, durch die Durchströmkammer 8 und aus der Ausströmöffnung 13, wie dies mit den Wasserströmungspfeilen 21 dargestellt ist. Dadurch wird auf die gerade vertikal und zylinderachsparallel gestellten Rotorflügel 10a und 10b eine Drehkraft für eine Rotordrehung entsprechend Pfeil 22 ausgeübt. Für eine möglichst kraftfreie Rückdrehung werden die Rotorflügel nach dem Durchgang am Trennwandbereich 6a waagerecht in eine Radialebene zwangsverschwenkt wie dies bei den Rotorflügeln 10c und 10d dargestellt ist. Nach dem Durchgang eines waagerecht geschwenkten Rotorflügels 10 durch den Durchtrittspalt 18 wird dieser wiederum in der Durchströmkammer 8 in die Vertikalstellung geschwenkt, wodurch er wieder nach einem Zyklus zur Beaufschlagung mit Wasserströmungskraft zur Verfügung steht.

In Fig. 2 ist strichliert eine einfach herstellbare Ausführungsform eingezeichnet, bei der die Radialachsen 17' am oberen Rand der Rotorflügel 10' angeordnet sind, so dass diese nur durch den Wasserdruck während der Drehung verschwenkt werden.

## Patentansprüche

1. Mit Wasserkraft betreibbares Kleinkraftwerk, insbesondere zur Erzeugung von Elektroenergie,
mit einem in einer Wasserströmung anordenbaren Drehbewegungsgenerator (1), der ein wasserdurchströmbares Rotorgehäuse (2) und einen darin mittels einer Rotorwelle (7) drehbar gelagerten, wasserantreibbaren Rotor (11) mit Rotorflügeln (10a, 10b, 10c, 10d) aufweist, wobei
die Rotorwelle (7) mit einem zum Abgriff der Drehbewegung ausgebildeten Abtriebswellenteil (7a) aus dem Rotorgehäuse (2) ragt und das Abtriebswellenteil (7a) mit einer nachgeordneten drehantreibbaren Vorrichtung, insbesondere einem Elektrogenerator koppelbar ist, und
das Rotorgehäuse (2) ein Zylindergehäuse mit einer Bodenwand (3), einer Deckelwand (4) und einer Zylindermantelwand (5) ist und die Rotorwelle (7) die Zylinderachse bildet,
**dadurch gekennzeichnet**
**dass** das Zylindergehäuse (2) ausgehend von der Zylindermantelwand wenigstens bis zur Zylinderachse eine parallele Trennwand (6) aufweist, welche das Zylindergehäuse (2) in einen Durchströmkammerbereich (8) und einen Rückdrehkammerbereich (9) teilt, wobei der Durchströmkammerbereich (8) in der Zylindermantelwand (5) angrenzend an den Trennwandbereich (6) eine Einströmöffnung (12) und eine dazu gegenüberliegende Ausströmöffnung (13) aufweist, und das Zylindergehäuse (2) insgesamt in die Wasserströmung eintauchbar und verankerbar ist,
**dass** an der Rotorwelle (7) gegeneinander in Umfangsrichtung versetzt, wenigstens zwei radial abstehende Rotorflügel (10a, 10b, 10c, 10d) zwangsgeführt schwenkbar gelagert sind, dergestalt dass sie mit den Rotorflügelflächen beim Durchgang durch die Durchströmkammer (8) zumindest in einem Teilbereich davon etwa zylinderachsparallel und beim Durchgang durch die Rückdrehkammer (9) zumindest in einem Teilbereich davon etwa in eine Radialebene schwenkbar sind, und
**dass** die Trennwand (6) im Bereich der zugeordneten Radialachsen einen Durchtrittspalt (18) für ein Eindrehen der in eine Radialebene geschwenkten Rotorflügel (10a, 10b, 10c, 10d) vom Rückdrehkammerbereich (9) in den Durchströmkammerbereich (8) aufweist.

2. Mit Wasserkraft betreibbares Kleinkraftwerk nach Anspruch 1, **dadurch gekennzeichnet, dass** die Rotorwelle (7) in der Funktionsstellung des Drehbewegungsgenerators (1) etwa vertikal ausgerichtet ist.

3. Mit Wasserkraft betreibbares Kleinkraftwerk nach Anspruch 1 oder 2, **dadurch gekennzeichnet, dass** sich die Einströmöffnung (12) und die Ausströmöffnung (13) jeweils zwischen der Bodenwand (3) und der Deckelwand (4) erstrecken, wobei sich zwischen der Einströmöffnung (12) und der Ausströmöffnung (13) ein Teil der Zylindermantelwand (5) erstreckt.

4. Mit Wasserkraft betreibbares Kleinkraftwerk nach einem der Ansprüche 1 bis 3, **dadurch gekennzeichnet, dass** am Rotorgehäuse (2) Halteelemente (14) angebracht sind für einen Anschluß von Verankerungseinrichtungen zur Verankerung des Rotorgehäuses (2) in einem Wasserlauf.

5. Mit Wasserkraft betreibbares Kleinkraftwerk nach einem der Ansprüche 1 bis 4, **dadurch gekennzeichnet, dass** die Trennwand (6) quer durch das gesamte Rotorgehäuse (2) geführt ist und dass auch ein Durchtrittspalt (18) für ein Ausdrehen der von einer achsparallelen Stellung in eine Radialebene schwenkenden Rotorflügel (10a, 10b, 10c, 10d) vom Durchströmkammerbereich (8) in den Rückführkammerbereich (9).

6. Mit Wasserkraft betreibbares Kleinkraftwerk nach einem der Ansprüche 1 bis 5, **dadurch gekennzeichnet, dass** die Rotorflügel (10a, 10b, 10c, 10d) plattenförmig ausgebildet sind.

7. Mit Wasserkraft betreibbares Kleinkraftwerk nach einem der Ansprüche 1 bis 6, **dadurch gekennzeichnet, dass** die Radialachsen (17a, 17b, 17c, 17d) außenmittig, vorzugsweise am oberen Rand der Rotorflügel (10a, 10b, 10c, 10d) angeordnet sind.

8. Mit Wasserkraft betreibbares Kleinkraftwerk nach einem der Ansprüche 1 bis 7, **dadurch gekennzeichnet, dass** wenigstens vier gleich beabstandete Rotorflügel (10a, 10b, 10c, 10d) verwendet sind.

9. Mit Wasserkraft betreibbares Kleinkraftwerk nach einem der Ansprüche 1 bis 8, **dadurch gekennzeichnet, dass** der oder die Durchtrittspalte (18) jeweils von einer durch die durchtretenden Rotorflügel (10a, 10b, 10c, 10d) aufdrückbaren Dichtlippe aus Elastomermaterial abgedeckt sind.

10. Mit Wasserkraft betreibbares Kleinkraftwerk nach einem der Ansprüche 1 bis 9, **dadurch gekennzeichnet, dass** vor der Einströmöffnung (12) wenigstens eine Strömungsleitwand und/oder ein Einströmtrichter (15) und/oder ein Schutzgitter (16) angeordnet sind.

11. Mit Wasserkraft betreibbares Kleinkraftwerk nach einem der Ansprüche 1 bis 10, **dadurch gekennzeichnet, dass** die Kraft für die zwangsgesteuerte Verschwenkung der Rotorflügel (10a, 10b, 10c, 10d) unmittelbar oder mittelbar von der durch das Rotorgehäuse (2) geführten Wasserströmung abgeleitet ist.

12. Mit Wasserkraft betreibbares Kleinkraftwerk nach Anspruch 12, **dadurch gekennzeichnet, dass** als Zwangssteuervorrichtung ein Getriebe verwendet ist, mit wenigstens einem rotorgehäusefesten und damit ortsfesten Getriebeteil und wenigstens einem zugeordneten rotorwellenfesten, mitdrehenden und durch einen Eingriff (20) schwenkveränderbaren Getriebeteil welches mit wenigstens einem Rotorflügel (10a, 10b, 10c, 10d) zu dessen Schwenkverstellung verbunden ist.
